# EUROPÄISCHE PATENTSCHRIFT

(11) **EP 3 027 881 B1**
(45) Veröffentlichungstag und Bekanntmachung des Hinweises auf die Patenterteilung: **04.10.2017**
(21) Anmeldenummer: 14745104.1
(22) Anmeldetag: 24.07.2014
(51) Int. Cl.: F02M 35/10, F02M 35/104, F02B 29/04, F02M 26/00

(54) **ANSAUGMODUL FÜR EINE BRENNKRAFTMASCHINE**
INDUCTION MODULE FOR AN INTERNAL COMBUSTION ENGINE
MODULE D'ASPIRATION DESTINÉ À UN MOTEUR À COMBUSTION INTERNE

(30) Priorität: 02.08.2013 DE 102013215234
(43) Veröffentlichungstag der Anmeldung: 08.06.2016
(73) Patentinhaber: Mahle International GmbH, 70376 Stuttgart (DE)
(72) Erfinder: ELFLEIN, Simon, 76228 Karlsruhe (DE); NAUJOKS, Sascha, 73627 Pfinztal (DE); SCHNEIDER, Simon, 70191 Stuttgart (DE); ZSIGA, Gerhard, 70469 Stuttgart (DE)
(74) Vertreter: BRP Renaud & Partner mbB Rechtsanwälte Patentanwälte Steuerberater
(86) Internationale Anmeldenummer: PCT/EP2014/065970
(87) Internationale Veröffentlichungsnummer: WO 2015/014721

(56) Entgegenhaltungen:
- EP-A1- 2 169 208
- EP-A2- 1 911 946
- DE-A1- 19 811 634
- DE-A1-102008 014 168
- FR-A1- 2 781 530
- FR-A1- 2 946 699
- US-A1- 2011 088 673

## Beschreibung

Die vorliegende Erfindung betrifft ein Ansaugmodul für eine Brennkraftmaschine.

Ansaugmodule für Brennkraftmaschinen dienen zum Ansaugen und Einbringen von Luft aus der Umgebung in die Brennkammer der Brennkraftmaschine. Grundsätzlich können in solche Ansaugmodule ein oder mehrere Funktionselemente des Ansaugtrakts der Brennkraftmaschine integriert sein, um der Tatsache Rechnung zu tragen, dass in einem Kraftfahrzeug nur in begrenztem Maße Bauraum vorhanden ist. Bekannt sind Konzepte, bei denen eine sog. Abgasrückführung in das besagte Ansaugmodul integriert wird. Generell dient die Abgasrückführung zur Reduktion der von der Brennkraftmaschine betriebsmäßig in die Umgebung abgegebenen Schadstoffe und basiert auf der Idee, einen Teil des beim Verbrennungsvorgang erzeugten Abgases mit der vom Ansaugmodul angesaugten Frischluft zu vermischen und erneut in die Brennkammer einzubringen. Solche Abgasrückführungssysteme werden etwa in Verbindung mit einem Abgasturbolader ausgeführt. Der Stand der Technik umfasst beispielsweise sog. Hochdruck- oder Niederdruck-Rückführungssysteme, je nachdem, an welcher Stelle im Ansaug- bzw. Abgastrakt der Brennkraftmaschine die Abgasrückführung erfolgt.

Problematisch bei solchen Abgasrückführungssystemen ist der im Kraftfahrzeug nur begrenzt zur Verfügung stehende Bauraum, welcher einer optimalen Durchmischung des rückgeführten Abgases mit angesaugter Frischluft entgegensteht. Bekannte Konzepte sehen eine Aufteilung des gesamten rückzuführenden Abgases auf mehrere Frischlufteinlässe vor, in welchen dann jeweils partiell die gewünschte Vermischung von Abgas mit Frischluft erfolgt. Allerdings steigt bei solchen Systemen die Komplexität der Leitungsverbindungen im Rückführungstrakt deutlich an.

Die EP 1 122 421 A2 beschreibt ein Saugrohr mit integriertem Abgasrückführungssystem für eine Brennkraftmaschine. Das Saugrohr umfasst einen Sammelraum für aus der Umgebung angesaugte Frischluft. In den Sammelraum mündet eine Abgasleitung, welche mit rückzuführendem Abgas durchströmt wird. Der Sammelraum besitzt einen Lufteinlass, welcher mit den entsprechenden Öffnungen in der Abgasleitung einen Winkel von im Wesentlichen 90° ausbildet.

Aus der DE 103 54 129 A1 ist eine Sauganlage für eine Brennkraftmaschine mit einem Frischgasverteiler bekannt. Der Frischgasverteiler umfasst mehrere Frischgasaustritte, wobei ein jeder solcher Frischgasaustritt einem bestimmten Zylinder der Brennkraftmaschine zugeordnet ist. Benachbart zum Frischluftverteiler ist ein Verteilerkanal einer Abgasrückführung vorgesehen, der mit dem Frischluftverteiler fluidisch kommuniziert.

Die US 5,957,116 beschreibt ein Abgasrückführungssystem für eine Brennkraftmaschine. Das Abgasrückführungssystem umfasst eine Abgasleitung mit mehreren Abgasaustrittsöffnungen, die in einer Umfangswand der Abgasleitung vorgesehen sind. Die Abgasleitung erstreckt sich innerhalb einer Ansaugleitung für Frischluft; Ansaugleitung und Abgasleitung erstrecken sich im Wesentlichen parallel zueinander.

Die EP 911 946 A2 behandelt ein Ansaugmodul mit integrierter Abgasrückführung. Das Ansaugmodul umfasst ein einen Gehäuseinnenraum begrenzendes Gehäuse, welches eine erste Gehäusewand mit wenigstens einem Lufteinlass zum Einleiten von Frischluft in den Gehäuseinnenraum und eine zweite Gehäusewand mit wenigstens einem Fluidauslass aufweist. Im Gehäuseinnenraum ist ein Ladeluftkühler angeordnet. Ferner umfasst das Ansaugmodul eine Durchmischungskammer, die Teil des Gehäuseinnenraums ist.

Weiterhin besitzt das Ansaugmodul eine Abgasleitung, die im Gehäuse angeordnet ist. Die Abgasleitung besitzt mehrere fluidisch mit der Durchmischungskammer kommunizierende Abgasauslasse, mittels welchem ein die Abgasleitung durchströmendes Abgas in die Durchmischungskammer einbringbar ist.

Die FR 2 781 530 A1 behandelt eine Zentrifugal-Turbine für eine Fahrzeugklimaanlage.

Die FR 2,946,699 A1 beschreibt ein Ansaugmodul mit einer Mischvorrichtung zum Mischen von rückgeführtem Abgas einer Brennkraftmaschine mit durch einen Ladeluftkühler vorgekühlter Ladeluft.

Die DE 198 11 634 A1 offenbart ein Luftansaugkanal für einen Dieselmotor mit integriertem Abgasrückführkanal.

Als problematisch bei der Rückführung von Abgas in die Brennkammer der Brennkraftmaschine erweist sich die relativ hohe Temperatur des rückzuführenden Abgases, welche generell eine Verringerung des in die Brennkraftmaschine einbringbaren Luftmassenstroms bewirkt und somit hinsichtlich des mit der Brennkraftmaschine erzielbaren Wirkungsgrads kontraproduktiv ist. Bekannte Konzepte zielen daher auf eine Kühlung des mit Frischluft vermengten Abgases im Ansaugtrakt durch thermische Wechselwirkung mit einem Kühlmedium ab. Hierzu geeignete Vorrichtungen sind als sogenannte Ladeluftkühler bekannt. Durch die Kühlung der mit Abgas versetzten Frischluft im Zusammenhang mit aufgeladenen Brennkraftmaschinen und als "Ladeluft" bekannt - kommt es jedoch zu Verunreinigungen von dem Fluidstrom ausgesetzten Bauteilen und des Ladeluftkühlers, was im schlimmsten Fall zu einem partiellen "Verstopfen" des Ladeluftkühlers führt. Auch kann das Abgas, wenn es mit Feuchtigkeit in Kontakt kommt, eine aggressive Säure bilden, die den Ladeluftkühler oder andere Bauteile angreift. Da sowohl im Abgas als auch in der Frischluft Feuchtigkeit enthalten ist, die beim Abkühlen unter den Taupunkt ausfällt, bestehen an diversen Stellen auch große Korrosionsprobleme.

Hauptaufgabe der vorliegenden Erfindung ist daher die Bereitstellung eines verbesserten Ansaugmoduls mit integrierter Abgasrückführung, bei welchem die oben genannten Probleme nicht mehr oder nur mehr in reduziertem Maße auftreten.

Diese Aufgabe wird durch den Gegenstand der unabhängigen Patentansprüche gelöst. Bevorzugte Ausführungsformen sind Gegenstand der abhängigen Ansprüche.

Grundgedanke der Erfindung ist demnach, in ein Ansaugmodul eingebrachte Frisch- bzw. Ladeluft erst nach dem Kühlen in einem Ladeluftkühler mit Abgas zu vermischen. Somit kann eine Verschmutzung und eine Beschädigung des Ladeluftkühlers bzw. der anderen Bauteile verhindert werden.

Die Durchmischung der Frisch- bzw. Ladeluft mit dem Abgas erfolgt dabei erfindungsgemäß in einer Durchmischungskammer, die zwischen einem Frischluftauslass des Ladeluftkühlers und einer Gehäusewand des Gehäuses des Ansaugmoduls ausgebildet ist. Besagte Gehäusewand des Gehäuses verfügt über mindestens einen Auslass, vorzugsweise mehrere Auslässe, welche zu Zylindern einer Brennkraftmaschine führen. Dies gestattet auf engstem Bauraum eine ausgeprägte und homogene Durchmischung des Abgases mit der Frischluft in der Durchmischungskammer. In der Folge lässt sich die mit Abgas durchmischte Frischluft homogen auf die verschiedenen Zylinder der Brennkraftmaschine verteilen, was deren Wirkungsgrad in nicht unerheblichem Maße verbessert.

Ein erfindungsgemäßes Ansaugmodul umfasst ein einen Gehäuseinnenraum begrenzendes Gehäuse welches eine erste Gehäusewand mit wenigstens einem Lufteinlass und eine zweite Gehäusewand mit wenigstens einem Fluidauslass aufweist. Im Gehäuseinnenraum ist ein Ladeluftkühler angeordnet. Das Ansaugmodul weist ferner eine Durchmischungskammer auf, die Teil des Gehäuseinnenraums ist und durch den Ladeluftkühler und die zweite Gehäusewand begrenzt wird. In der Durchmischungskammer ist eine Abgasleitung angeordnet, in welcher wenigstens ein fluidisch mit der Durchmischungskammer kommunizierender Abgasauslass vorgesehen ist. Dieser Abgasauslass ist auf einer dem Lufteinlass und somit dem Ladeluftkühler zugewandten Seite der Abgasleitung vorgesehen. Mittels des Abgasauslasses kann das die Abgasleitung durchströmende Abgas in die Durchmischungskammer eingebracht werden. Der Abstand zwischen der Abgasleitung und dem Ladeluftkühler ist derart gewählt, dass das ausströmende Abgas den Ladeluftkühler gerade noch anströmt, jedoch nicht in den Ladeluftkühler eindringt. Somit legt das eingeleitete Abgas die Distanzstrecke zwischen Abgasleitung und Ladeluftkühler zwei Mal zurück, wobei sich das Abgas beim Strömen entgegen der Ladeluftströmung bereits mit dieser vermischt und die Vermischung bei dem Zurückströmen bis zu der Abgasleitung weiterschreitet. In dem Bereich nach der Abgasleitung vermischt sich das Abgas weiterhin mit der Ladeluft, wodurch eine sehr homogene Durchmischung erreicht wird, bevor das Gasgemisch in die zu den einzelnen Zylindern führenden Auslässe eintritt. Im Ergebnis wird eine Verunreinigung des Ladeluftkühlers verhindert und eine maximale Mischstrecke gebildet, die zu einer besonders homogenen Durchmischung der Gase führt.

In einer bevorzugten Ausführungsform verläuft die Strömungsrichtung des in die Durchmischungskammer eingebrachten Abgases entgegengesetzt zur Strömungsrichtung der in die Durchmischungskammer eingebrachten Frischluft. Folglich bilden die beiden Richtungen einen Winkel von im Wesentlichen 180° zueinander aus. Unter "im Wesentlichen" ist dabei ein Winkelintervall von 160° bis 200, vorzugsweise von 170° bis 190° zu verstehen. Eine besonders gute Durchmischung der Frischluft mit Abgas wird erreicht, wenn Luft- und. Abgasmoleküle unter einem Winkel von möglichst genau 180° aufeinander treffen, denn in diesem Fall weisen die Luft- bzw. Abgasmoleküle beim Aufeinandertreffen einen zueinander entgegengesetzten Impuls auf, was deren Durchmischung besonders stark fördert.

Gemäß einer besonderen Ausgestaltung der Erfindung entspricht der Abstand zwischen der Abgasleitung und dem Ladeluftkühler im Wesentlichen dem Abstand der Abgasleitung zu der zweiten Gehäusewand, in der die Fluidauslässe zu den Zylindern angeordnet sind. Durch eine solche Ausgestaltung kann die Mischlänge in der Durchmischungskammer verlängert werden.

Bei anderen Ausführungen kann der Abstand von der Abgasleitung zum Ladeluftkühler aber auch größer oder kleiner sein als der Abstand zwischen der Abgasleitung und besagter zweiter Gehäusewand. Je nach Auslegung kann so eine Vervielfachung, z. B. Verdopplung oder Verdreifachung, der Mischlänge erreicht werden.

Bei besonderen Ausgestaltungen beträgt der Abstand zwischen der Abgasleitung und dem Ladeluftkühler ca. 2 - 10 cm, vorzugsweise ca. 4 - 5 cm.

Für den Fachmann fertigungstechnisch besonders einfach gestaltet sich die Realisierung des Ladeluftkühlers in Form eines Kühlmittelrohrs. Ein solches Kühlmittelrohr kann stirnseitig jeweils einen Kühlmitteleinlass bzw. Kühlmittelauslass aufweisen. Alternative Ladeluftkühler können als Rohrbündelkühler oder Rippe-Rohr-Kühler mit einem Kühlergehäuse ausgebildet sein, in welchem jeweils wenigstens ein Kühlmittelpfad vorgesehen ist. Ein derartig realisierter Ladeluftkühler kann an einer stirnseitigen Gehäusewand seines Kühlergehäuses einen Kühlmitteleinlass und einen Kühlmittelauslass aufweisen und bezüglich des Kühlmittelpfads im Wesentlichen parallel zur Abgasleitung im Gehäuseinnenraum angeordnet sein. Auf diese Weise stellt sich eine besonders gleichmäßige Vermischung von Frischluft und Abgas in der Durchmischungskammer ein.

Besonders zweckmäßig kann der Ladeluftkühler ein Kühlergehäuse aus Metall umfassen. Alternativ oder zusätzlich kann das Gehäuse des Ansaugmoduls aus einem Kunststoff hergestellt sein.

In einer anderen bevorzugten Ausführungsform kann das Kühlergehäuse eine der Abgasleitung zugewandte Gehäusewand aufweisen, in welcher wenigstens ein Ladeluftauslass zum Einleiten der im Ladeluftkühler gekühlten Frischluft in die Durchmischungskammer vorgesehen ist. Auf diese Weise kann eine besonders homogene Durchmischung des den Ladeluftkühler verlassenden Frisch- bzw. Ladeluft mit dem aus der Abgasleitung in die Durchmischungskammer eingeleiteten Abgas erzielt werden.

Bei der Herstellung des Ansaugmoduls können Ladeluftkühler und/oder Abgasleitung besonders zweckmäßig integral am Gehäuse des Ansaugmoduls ausgeformt werden. Hierdurch entfällt eine aufwändige Vormontage der beiden Bauteile am Gehäuse, was die Fertigungskosten des Ansaugmoduls in nicht unerheblichem Maße senkt. Denkbar ist aber auch, an einer geeigneten Stelle im Gehäuse einen Durchbruch vorzusehen, durch welchen der Ladeluftkühler lösbar in das Gehäuse eingesetzt werden kann.

Angesichts ihrer hohen Steifigkeit stellt eine Realisierung der Abgasleitung in Form eines Abgasrohrs eine besonders vorteilhafte Bauform dar. Selbstverständlich bieten sich aber abweichend von einer solchen Rohrform auch andere geeignete Formen an. Unter fertigungstechnischen Gesichtspunkten besonders einfach zu realisieren ist die Abgasleitung in Form eines Abgasrohrs, das mit einer Umfangswand ausgestattet ist, in welcher wiederum der wenigstens ein Abgasauslass vorgesehen ist.

Zum Zwecke der Bauraumoptimierung empfiehlt es sich, die Abgasleitung etwa im Wesentlichen quer zu einer Luftströmungsrichtung anordnen, entlang welcher die mit Abgas zu durchmischende Frisch- bzw. Ladeluft in die Durchmischungskammer einströmt.

Als aus fertigungstechnischer Sicht besonders vorteilhaft erweist sich eine Ausführungsform, bei welcher das Gehäuse mit einem Durchbruch versehen ist, durch welchen die Abgasleitung von außen in die Durchmischungskammer durchgeführt ist.

Besonders zweckmäßig bietet sich an, die Durchführung der Abgasleitung durch das Gehäuse in einem Gehäusebereich seitlich zur ersten und zweiten Gehäusewand vorzusehen.

Vorzugsweise ist am Gehäuse nicht nur ein einziger Fluidauslass vorgesehen, sondern vielmehr eine Mehrzahl von Fluidauslässen, welche einer Anzahl an Zylindern einer das Ansaugmodul verwendenden Brennkraftmaschine entspricht, so dass jeder Fluidauslass einem bestimmten Zylinder zugeordnet ist. In einer Variante sind jedem Zylinder genau zwei Fluidauslässe zugeordnet, d.h. die Anzahl an Fluidauslässen beträgt das Zweifache der Zylinderzahl.

Auch für die Ausgestaltung des Abgasauslasses bieten sich dem Fachmann verschiedene konstruktive Optionen. So kann ein solcher in der einfachsten Form wenigstens eine Abgas-Auslassöffnung umfassen. Vorzuziehen ist eine Variante mit vier solchen Abgas-Auslassöffnungen, die im Abstand entlang der Abgasleitung anzuordnen sind, um gegenüber der Option mit nur einer Abgas-Auslassöffnung eine besonders gleichmäßige Einleitung von Abgas in die Durchmischungskammer sicherzustellen. Bevorzugt beträgt die Anzahl an Abgas-Auslassöffnungen das Zweifache, besonders bevorzugt ein Vielfaches oder mehr, einer Zylinderanzahl der das Ansaugmodul verwendenden Brennkraftmaschine.

Um in den oben beschriebenen Szenarien die Durchmischung von Frischluft und Abgas weiter zu verbessern, empfiehlt sich die Anbringung von wenigstens einem Ablenkelement in der Durchmischungskammer, und zwar bzgl. der Strömungsrichtung der Frischluft zwischen Ladeluftkühler und Abgasleitung. Die Platzierung eines solchen Ablenkelements, beispielsweise in der Art eines Schildes, sollte derart erfolgen, dass es wenigstens einen Teil der in die Durchmischungskammer eingebrachten Frischluft ablenkt, bevor sie auf das in die Durchmischungskammer eingebrachte Abgas trifft. Hinsichtlich des Durchmischungsprozesses lassen sich besonders gute Ergebnisse erzielen, wenn das Ablenkelement auch eine Ablenkung des Abgases bewirkt, bevor dieses auf die Frischluft trifft. Besonders zweckmäßig bietet es sich an, das Ablenkelement so auszugestalten, dass es die in die Durchmischungskammer eingeleitete Frischluft kanalisiert, bevor diese mit Abgas vermischt wird.

Bei einer vorteilhaften Weiterbildung sind der Lufteinlass und der Abgasauslass in einem Querschnitt der Durchmischungskammer einander zugewandt. In diesem Querschnitt kann das Ablenkelement eine zum Luftauslass hin gekrümmte, vorzugsweise kreissegmentartige, Geometrie aufweisen. Dies bewirkt die gewünschte Kanalisierung der Strömungsrichtung des in die Durchmischungskammer eingebrachten Abgases, bevor es auf Frischluft trifft. In diesem Szenario besitzen Frischluft und Abgas zwar beim Einleiten in die Durchmischungskammer im Wesentlichen entgegengesetzte Strömungsrichtungen, nicht jedoch beim eigentlichen Aufeinandertreffen von Abgas- und Frischluftmolekülen in der Durchmischungskammer. Die störende Ausbildung von Wirbelströmungen, die den Luft- bzw. Abgasmassendurchsatz durch das Saugmodul unerwünschterweise verringern können, wird auf diese Weise weitgehend ausgeschlossen.

Für den Fall, dass in der Abgasleitung mehrere Abgas-Auslassöffnungen vorgesehen sind, bietet es sich an, in der Abgas-Auslassöffnung ein nach innen in die Abgasleitung abstehendes Abgas-Ablenkelement vorzusehen, welches zum wenigstens teilweisen Ablenken des durch die Abgasleitung strömenden Abgases dienen kann. Ein solches Abgas-Ablenkelement vermag die Ausleitung eines Bruchteils des die Abgasleitung durchströmenden Abgases zu unterstützen. Somit wird ein wenig effektives Aufstauen des Abgases am Ende der Abgasleitung weitgehend oder gar vollständig vermieden. Stattdessen wird in vorteilhafter Weise ein in etwa gleicher Massendurchsatz durch die einzelnen Abgas-Auslassöffnungen erzielt.

Gemäß einer vorteilhaften Ausführungsform bildet das Abgas-Ablenkelement im Querschnitt der Durchmischungskammer mit einer Umfangswand der Abgasleitung einen Winkel von im Wesentlichen 135° aus. Es ist klar, dass der Fachmann durch unkomplizierte bauliche Veränderungen auch andere Winkel realisieren kann. Die Abgas-Ablenkelemente wirken in jedem Falle als eine Art Führung zur Ausleitung von Abgas als der Abgasleitung über die dem jeweiligen Ablenkelement zugeordnete Abgas-Auslassöffnung.

Technisch besonders einfach zu realisieren sind Abgas-Auslassöffnungen, die etwa eine runde, insbesondere kreisrunde, eine elliptische, eine vieleckige, vorzugsweise eine rechteckige, höchst vorzugsweise eine quadratische, Öffnungskontur oder eine Kombination aus diesen Konturen, insbesondere eine Kombination aus einem Rechteck und einem Halbrund, aufweisen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1a: ein Beispiel eines erfindungsgemäßen Ansaugmoduls,
- Figur 1b: ein alternatives Beispiel des Ansaugmoduls gemäß Figur 1a,
- Fig. 2: eine Variante des Beispiels der Figuren 1a und 1b mit einem Ablenkelement zum Ablenken von in die Durchmischungskammer eingebrachtem Abgas,
- Fig. 3: eine weitere Variante des Beispiels der Figuren 1a, 1b und 2 mit Ablenkelementen zum Ablenken des die Abgasleitung durchströmenden Abgases,
- Fig.4: ein Beispiel für eine mögliche geometrische Form einer AbgasAuslassöffnung.

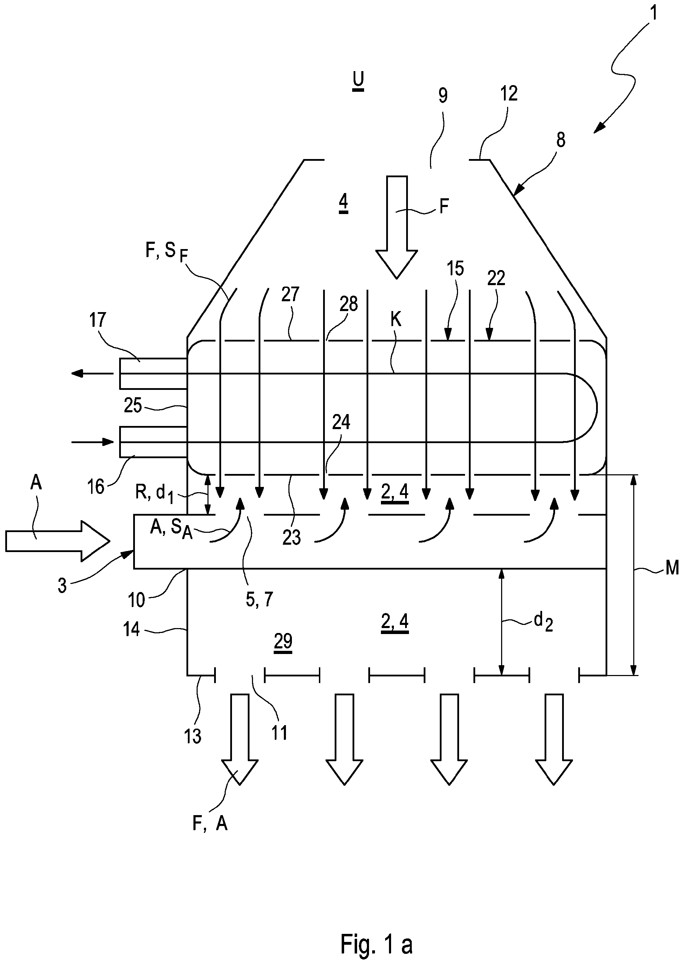

Die Figur 1a illustriert in einer schematischen Darstellung ein Beispiel eines erfindungsgemäßen Ansaugmoduls 1 mit integrierter Abgasrückführung. Das Ansaugmodul 1 umfasst ein einen Gehäuseinnenraum 4 begrenzendes Gehäuse 8 aus einem Kunststoff. Das Gehäuse 8 umfasst eine erste Gehäusewand 12 mit wenigstens einem Lufteinlass 9 und eine zweite Gehäusewand 13 mit wenigstens einem Fluidauslass 11. Über den Lufteinlass 9 kann von einem Abgasturbolader aufgeladen Ladeluft bzw. Frischluft F in den Gehäuseinnenraum 4 eintreten. Im Gehäuseinnenraum 4 ist ein Ladeluftkühler 15 angeordnet, welcher von der in den Gehäuseinnenraum 4 eingeleiteten Frischluft F durchströmt wird. Auf diese Weise wird die Frischluft F - bei dieser handelt es sich typischerweise um von einem Abgasturbolader komprimierte, heiße Ladeluft - vom Ladeluftkühler 15 gekühlt.

Das Ansaugmodul 1 besitzt ferner eine Durchmischungskammer 2, die Teil des Gehäuseinnenraums 4 ist und durch den Ladeluftkühler 15 und die zweite Gehäusewand 13 begrenzt wird. In der Durchmischungskammer 2 ist eine Abgasleitung 3 angeordnet, in welcher wenigstens ein Abgasauslass 7 vorgesehen ist, über welchen die Abgasleitung 3 fluidisch mit der Durchmischungskammer 2 kommuniziert. Aufgrund ihrer hohen Steifigkeit empfiehlt sich eine Realisierung der Abgasleitung 3 in Form eines Abgasrohrs. Selbstverständlich bieten sich aber abweichend von einer solchen Rohrform auch andere geeignete Bauformen an.

Der Abgasauslass 7 ist auf einer dem Lufteinlass 9 zugewandten Seite der Abgasleitung 3 vorgesehen. Über den Abgasauslass 7 wird ein die Abgasleitung 3 durchströmendes Abgas A in die Durchmischungskammer 2 eingeleitet, wo es mit der aus dem Ladeluftkühler 15 austretender Frischluft F vermischt wird. Die mit dem Abgas A vermischte Frischluft F verlässt die Durchmischungskammer 2 durch den wenigstens einen Fluidauslass 11.

Typischerweise ist am Gehäuse 8 nicht nur ein einziger Fluidauslass 11 vorgesehen. Vielmehr entspricht die Anzahl an Fluidauslässen 11 bevorzugt der Anzahl an Zylindern der mit dem Ansaugmodul 1 zusammenwirkenden Brennkraftmaschine oder beträgt ein Zweifaches dieser Anzahl. Das in der Figur 1a exemplarisch gezeigte Ansaugmodul 1 mit vier Fluidauslässen 11 ist also zur Verwendung mit einer Brennkraftmaschine mit vier oder mit acht Zylindern konzipiert.

Für den Fachmann fertigungstechnisch besonders einfach gestaltet sich die Realisierung der Ladeluftkühlereinheit 15 in Form eines Kühlmittelrohrs. Ein solches Kühlmittelrohr kann stirnseitig jeweils einen Kühlmitteleinlass bzw. Kühlmittelauslass aufweisen. Technisch komplexere Varianten des Ladeluftkühlers 15 können hingegen als sogenannte Rohrbündelkühler oder Rippe-Rohr-Kühler ausgebildet sein. Ein solcher Ladeluftkühler 15 kann einen Kühlmittelpfad K aufweisen, der in Figur 1a nur grobschematisch skizziert ist und zur Kühlung der den Ladeluftkühler 15 durchströmenden Frischluft F von einem Kühlmittel durchströmt wird. Der Ladeluftkühler 15 kann ein Kühlergehäuse 22 aus Metall aufweisen, welches ganz oder teilweise von dem Gehäuse 8 umgeben ist. Das Kühlergehäuse 22 kann eine der Abgasleitung 3 zugewandte Gehäusewand 23 umfassen, in welcher im Beispiel der Figur 1a exemplarisch acht Ladeluftauslässe 24 vorgesehen sind.

Nach dem Durchströmen des Ladeluftkühlers 15 - hierzu kann die in den Gehäuseinnenraum 4 eingeleitete Frischluft F durch Ladelufteinlässe 28, die in einer der Gehäusewand 23 gegenüberliegenden Gehäusewand 27 des Kühlergehäuses 22 vorgesehen sind, in den Ladeluftkühler 15 eintreten - tritt die Frischluft F über die Ladeluftauslässe 24 in die Durchmischungskammer 2 ein. Der Ladeluftkühler 15 kann - bezüglich des Kühlmittelpfads K an einer stirnseitigen Gehäusewand 25 - außerhalb der Durchmischungskammer 2 mit einem Kühlmitteleinlass 16 bzw. Kühlmittelauslass 17 zum Ein- bzw. Ausleiten von Kühlmittel in den bzw. aus dem Ladeluftkühler 15 versehen werden.

Um eine besonders gleichmäßige Vermischung der Frischluft F mit dem Abgas A zu erreichen, bietet es sich an, den Ladeluftkühler 15 bezüglich der Erstreckung des Kühlmittelpfads K im Wesentlichen parallel zur Abgasleitung 3 im Gehäuseinnenraum 4 anzuordnen.

Entsprechend Figur 1a ist die erfindungsgemäße Durchmischungskammer 2 zwischen der die Ladeluftauslässe 24 aufweisenden Gehäusewand 23 des Ladeluftkühlers 15 und der zweiten Gehäusewand 13 des Gehäuses 8 des Ansaugmoduls 1, in welcher die Fluidauslässe 11 angeordnet sind, ausgebildet. Somit ergibt sich in der Durchmischungskammer 2 eine Mischstrecke M innerhalb welcher sich die Frischluft mit dem Abgas A vermischen kann. Durch das im Gegenstromprinzip eingeblasene Abgas A strömt das Abgas A in Richtung des Ladeluftkühlers 15, wobei das Abgas eine Rückströmstrecke R zurücklegt. Somit verlängert sich die Mischstrecke M um die Länge der Rückströmstrecke R, wodurch eine verbesserte Vermischung der Gase F, A erzielt wird.

Die durch den Ladeluftkühler 15 hindurchgeführte gekühlte Frischluft weist durch in dem Ladeluftkühler 15 angeordnete Strömungsführungen (nicht gezeigt) beim Austritt aus dem Ladeluftkühler 15 eine sehr gleichmäßige, geradlinig gerichtete Strömung auf. Die im Gegenstrom auf den Ladeluftkühler 15 gerichtete Abgasströmung erreicht bei optimaler Auslegung den Ladeluftkühler 15, ohne dass das Abgas A in den Ladeluftkühler 15 eindringt. Somit ist ein unerwünschtes Verschmutzen des Ladeluftkühlers 15 verhindert. Weiterhin ist die Mischstrecke M, auf welcher eine Durchmischung der Frischluft F mit dem Abgas A erfolgt, vergrö-ßert, was zu einer verbesserten Durchmischung der Gase führt.

Im Beispiel der Figur 1a ist ein Abstand d₁ zwischen der Abgasleitung 3 und dem Ladeluftkühler 15 derart gewählt, dass das ausströmende Abgas A den Ladeluftkühler 15 gerade noch anströmt, jedoch nicht mehr in den Ladeluftkühler 15 eindringt. Somit legt das eingeleitete Abgas A die Distanzstrecke d₁ zwischen Abgasauslass 7 und Ladeluftkühler 15 zwei Mal zurück, wobei sich das Abgas A beim Strömen entgegen der Ladeluftströmung bereits mit dieser vermischt und die Vermischung beim Zurückströmen bis zu der Abgasleitung 3 weiterschreitet. In dem Bereich 29 stromab der Abgasleitung 3 vermischt sich das Abgas A weiterhin mit der Frischluft F, wodurch eine sehr homogene Durchmischung erreicht wird, bevor das Gasgemisch durch die zu den einzelnen Zylinder führenden Fluidauslässe 11 strömt. Im Ergebnis wird eine unerwünschte Verunreinigung des Ladeluftkühlers 15 verhindert und eine maximale Mischstrecke mit einer homogenen Durchmischung der Gase gebildet.

Bei besonderen Ausgestaltungen beträgt der Abstand d₁ zwischen der Abgasleitung 3 und dem Ladeluftkühler 15 ca. 2 - 10 cm, vorzugsweise ca. 4 - 5 cm.

Die Einleitung des Abgases A in die Durchmischungskammer 2 des Ansaugmoduls 1 erfolgt mit einer Strömungsrichtung S_{A} entgegengesetzt zur Strömungsrichtung S_{F} der Frischluft F, und zwar über vier in der Abgasleitung 3 in Strömungsrichtung S_{A} benachbart zueinander angeordneter Abgas-Auslassöffnungen 5. Der Lufteinlass 9 und der Abgasauslass 7 sind in einem Querschnitt der Durchmischungskammer 3 einander zugewandt. Dies gestattet eine gegenüber herkömmlichen Ansaugmodulen verbesserte Durchmischung des Abgases A mit Frischluft F auch auf engstem Bauraum. Somit lässt sich die derart mit Abgas A durchmischte Frischluft F homogen in die Brennkraftmaschine einbringen, was deren Wirkungsgrad erheblich verbessert. Zur Bauraumoptimierung wird die Abgasleitung 3 im Wesentlichen quer zu einer Strömungsrichtung S_{F} der Frischluft F im Gehäuseinnenraum 4 angeordnet.

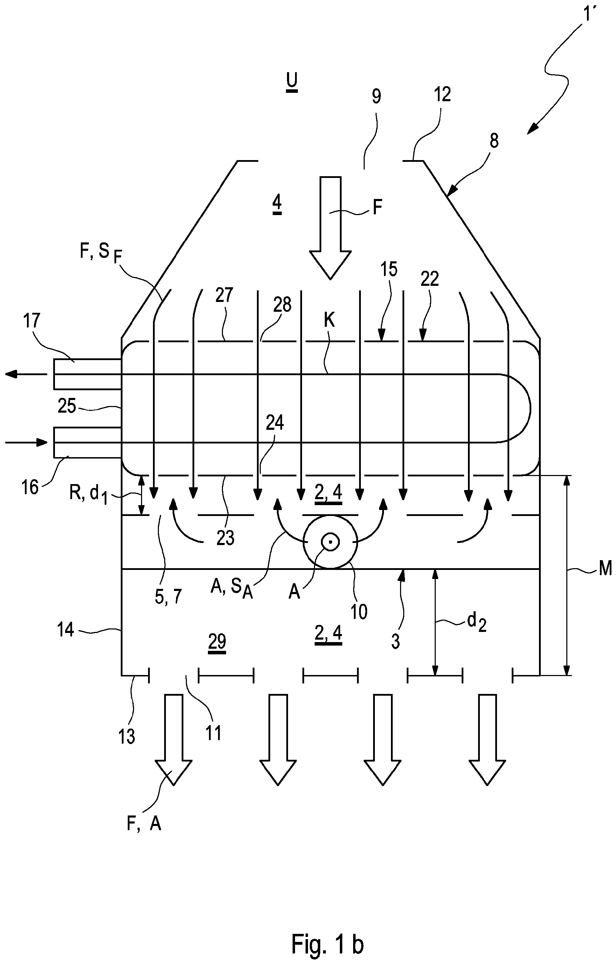

Das Gehäuse 8 ist mit einem Durchbruch 10 versehen, durch welchen die Abgasleitung 3 von außen in die Durchmischungskammer 2 durchgeführt ist. Dabei bietet es sich an, den Durchbruch 10 durch das Gehäuse 8 in einem seitlichen Bereich des Gehäuses 8 - insbesondere seitlich zur ersten und zweiten Gehäusewand 12, 13 - vorzusehen. Im Querschnitt der Durchmischungskammer 2 kann dies eine Gehäuseseitenwand 14 sein, welche die erste mit der zweiten Gehäusewand 12, 13 verbindet. Eine alternative Ausführung des Durchbruches 10 in einem oberen oder unteren Bereich wird nachfolgend in Figur 1b vorgestellt.

Um eine möglichst ausgeprägte Durchmischung von Frischluft F und Abgas A zu erzielen, empfiehlt es sich entsprechend Figur 1a, die Abgasleitung 3 derart im Gehäuse 8 zu platzieren, dass die Abgas-Auslassöffnungen 5 dem Lufteinlass 9 zugewandt sind. Dann strömt das aus der Abgasleitung 3 austretende Abgas A wie gewünscht in im
Wesentlichen entgegengesetzter Richtung S_{A} zur Frischluft F in die Durchmischungskammer 3 hinein, was einen homogenen Durchmischungsprozess von Frischluft F und Abgas A begünstigt.

Wie in Figur 1a illustriert, kann die Strömungsrichtung S_{A} entgegengesetzt zur Strömungsrichtung S_{F} verlaufen. Denn eine gute Durchmischung von Frischluft F mit Abgas A wird gerade erzielt, wenn Luft- und Abgasmoleküle unter einem Winkel von möglichst genau 180° aufeinander treffen. In diesem Fall bilden die beiden Richtungen S_{A}, S_{F} einen Winkel von 180° zueinander aus. Andere bevorzugte Winkelwerte für den Winkel zwischen den Strömungsrichtungen S_{A}, S_{F} können durch ein Winkelintervall von 160° bis 200 oder von 170° bis 190° definiert sein.

Vorzugsweise entspricht der Abstand dᵢ zwischen der Abgasleitung 3 und dem Ladeluftkühler 15 einem Abstand d₂ der Abgasleitung 3 zur zweiten Gehäusewand 13, in der die Fluidauslässe 11 zu den Zylindern angeordnet sind (nicht gezeigt). Durch eine solche Ausgestaltung kann die Mischlänge in der Durchmischungskammer 2 wesentlich verlängert werden.

In dazu alternativen Varianten des Beispiels kann der Abstand dᵢ zwischen der Abgasleitung 3 und dem Ladeluftkühler 15 größer (nicht gezeigt) oder, wie in Figur 1a dargestellt, kleiner sein als der Abstand d₂ zwischen der Abgasleitung 3 und besagter zweiter Gehäusewand 13. Entsprechend der Auslegung kann so eine Vervielfachung, z. B. Verdopplung oder Verdreifachung, der Mischlänge erreicht werden.

Im Beispiel der Figur 1a bilden die vier Abgas-Auslassöffnungen 5 den Abgasauslass 7 aus. Selbstverständlich ist die in der Figur 1a gezeigte Anzahl von vier Abgas-Auslassöffnungen 5 als rein exemplarisch anzusehen. Bevorzugt ist eine Anzahl an Abgas-Auslassöffnung 5 vorgesehen, die größer ist als die Anzahl der Zylinder der das Ansaugmodul 1 verwendenden Brennkraftmaschine. Bevorzugt beträgt die Anzahl an Abgas-Auslassöffnungen 5 ein Vielfaches der Zylinderzahl oder mehr. Beispielsweise ist die Verwendung von acht, aber auch von 16 Abgas-Auslassöffnungen 5 vorstellbar, wenn das Ansaugmodul 1 bei einer Brennkraftmaschine mit vier Zylindern eingesetzt wird. Alternativ können jedoch auch beliebig viele, den einzelnen Zylindern nicht individuell zugeordnete Abgas-Auslassöffnungen 5 vorgesehen sein.

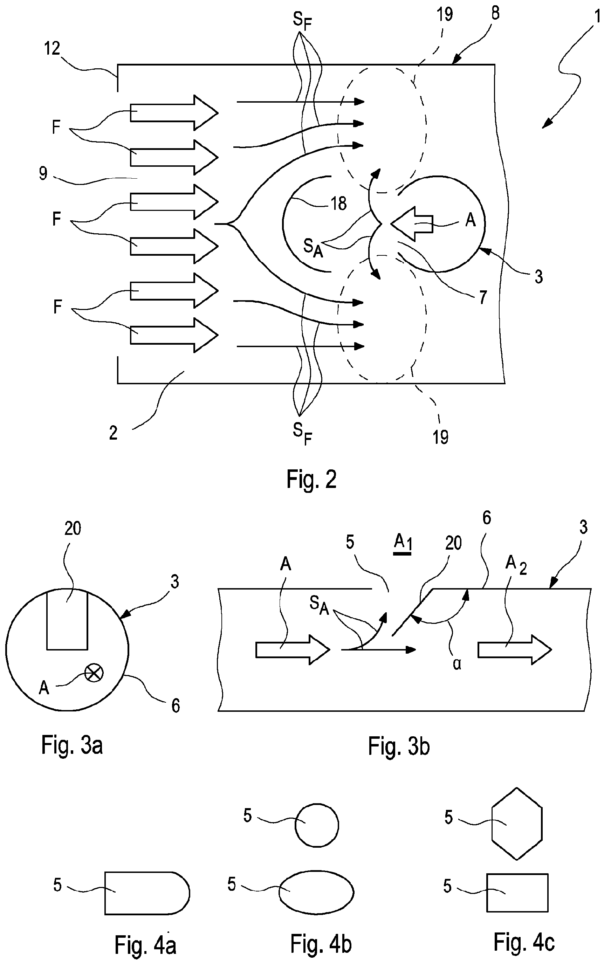

Hinsichtlich der geometrischen Ausgestaltung der Abgas-Auslassöffnungen 5 selbst bieten sich dem Fachmann verschiedene konstruktive Optionen, die exemplarisch in der grobschematischen Darstellung der Figur 4 gezeigt sind. Technisch besonders einfach zu realisieren sind Abgas-Auslassöffnungen 5, die etwa eine runde, insbesondere kreisrunde, oder eine elliptische Öffnungskontur aufweisen, vgl. hierzu Figur 4b. Alternativ empfiehlt sich eine in der Figur 4c gezeigte Realisierung mit einer vieleckigen Öffnungskontur, so beispielsweise einer rechteckige und dabei insbesondere einer quadratische Öffnungskontur. Auch eine in der Figur 4a skizzierte Kombination aus einem Rechteck und einem Halbrund ist denkbar.

Zum Zwecke einer kostengünstigen Fertigung des erfindungsgemäßen Ansaugmoduls 1 können Ladeluftkühler 15 und Abgasleitung 3 integral am Gehäuse 8 der Durchmischungskammer 3 ausgeformt werden. Alternativ dazu können Ladeluftkühler 15 und Abgasleitung 3 aber auch mit dem Gehäuse 8 verschraubt oder verschweißt werden.

In Figur 1b ist eine alternative Ausgestaltung des Ansaugmoduls 1' der Figur 1a dargestellt. Dieses Ausführungsbeispiel entspricht im Wesentlichen dem in Figur 1a erläuterten Ansaugmodul 1. Daher können alle zu Figur 1a gehörigen Ausführungen, insbesondere jene der Figuren 2 bis 4, auf das Ansaugmodul 1' mutatis mutandis übertragen werden. Im Unterschied zu Figur 1a ist der Durchbruch 10 bei der Variante der Figur 1b nicht in dem seitlichen Bereich des Gehäuses 8 angeordnet, sondern in einem oberen bzw. unteren Bereich des Gehäuses 8. Somit wird das Abgas A nicht seitlich in den Gehäuseinnenraum 4 eingeleitet, wodurch sich sehr unterschiedliche Strömungslängen in der Abgasleitung 3 ergeben, sondern über einen zentralen Bereich. Durch diese Art der Einleitung verkürzen sich die Strömungslängen in der Abgasleitung 3, wodurch sich gleichmäßigere Druckverhältnisse einstellen und sich so eine gleichmäßigere Einleitung des Abgases ergibt.

Um die vorliegend erläuterte Durchmischung von Frischluft F und Abgas A weiter zu verbessern, empfiehlt sich die in Figur 2 schematisch illustrierte Anbringung eines Ablenkelements 18 in der Durchmischungskammer 2, und zwar in Strömungsrichtung S_{F} der Frischluft F zwischen Lufteinlass 9 und Abgasleitung 3, vergleiche hierzu Fig. 1. Die Platzierung eines solchen Ablenkelements 18, beispielsweise in der Art eines Schildes, erfolgt derart, dass es wenigstens einen Teil der in die Durchmischungskammer 3 eingebrachten Frischluft F ablenkt, bevor diese auf das Abgas A trifft.

Das in der Figur 2 im Querschnitt gezeigte Ablenkelement 18 weist die Form eines Kreissegments auf und bewirkt eine Ablenkung des in die Durchmischungskammer 2 eingebrachten Abgases A. Dabei wird die Frischluft F zu Randbereichen des Gehäuses 8 hin kanalisiert. Folglich besitzen Frischluft F und Abgas A zwar beim Einleiten in die Durchmischungskammer 2 entgegengesetzte Strömungsrichtungen S_{F}, S_{A}, aufgrund der ablenkenden Eigenschaften des Elements 18 jedoch nicht jedoch beim eigentlichen Aufeinandertreffen in der Durchmischungskammer 2 in dem in Figur 2 mit 19 bezeichneten Bereich.

Gemäß dem in Figur 2 gezeigten Querschnitt der Durchmischungskammer 3 kann das Ablenkelement 18 generell eine zum Abgasauslass 7 hin gekrümmte, beispielsweise kreissegmentartige, Geometrie aufweisen. Die Ausbildung von Wirbelströmungen, die den Luft- bzw. Abgasmassendurchsatz durch das Saugmodul 1 auf unerwünschte Weise verringern können, wird auf diese Weise weitgehend vermieden.

Alternativ oder zusätzlich zum in Figur 2 gezeigten Ablenkelement 18 kann etwa für den Fall, dass in der Abgasleitung 3 mehrere Abgas-Auslassöffnungen 5 vorgesehen sind, an wenigstens einer Abgas-Auslassöffnung 5 ein nach innen in die Abgasleitung 3 abstehendes Abgas-Ablenkelement 20 vorgesehen sein. Dies ist in Figur 3 sowohl grobschematisch als auch exemplarisch für eine einzige solche Auslassöffnung 5 gezeigt, wobei die Figuren 3a und 3b die Abgasleitung 3 in einem Quer- bzw. Längsschnitt zeigt. Ein solches Abgas-Ablenkelement 20 vermag die Ausleitung eines Teils A, des die Abgasleitung durchströmenden Abgases A zu unterstützen, wohingegen der zur Teilmenge A, komplementäre Teil des Abgases A₂ in der Abgasleitung 3 verbleibt. Auf diese Weise wird ein wenig effektives Aufstauen von Abgas A am axialen Ende der Abgasleitung 3 weitgehend oder gar vollständig vermieden.

Gemäß dem Beispiel der Figur 3b kann das Abgas-Ablenkelement 20 im Querschnitt der Durchmischungskammer 3 mit einer Umfangswand 6 der Abgasleitung 3 einen Winkel a von im Wesentlichen 135° ausbilden. Selbstverständlich lassen sich durch unkomplizierte bauliche Veränderungen auch andere Werte für den Winkel a realisieren.

## Patentansprüche

1. Ansaugmodul (1) mit integrierter Abgasrückführung,
- mit einem einen Gehäuseinnenraum (4) begrenzenden Gehäuse (8), welches eine erste Gehäusewand (12) mit wenigstens einem Lufteinlass (9) zum Einleiten von Frischluft (F) in den Gehäuseinnenraum (4) und eine zweite Gehäusewand (13) mit wenigstens einem Fluidauslass (11) aufweist,
- mit einem im Gehäuseinnenraum (4) angeordneten Ladeluftkühler (15),
- mit einer Durchmischungskammer (2), die Teil des Gehäuseinnenraums (4) ist und durch den Ladeluftkühler (15) und die zweite Gehäusewand (13) begrenzt ist,
- mit einer in der Durchmischungskammer (2) angeordneten Abgasleitung (3), in welcher wenigstens ein fluidisch mit der Durchmischungskammer (2) kommunizierender Abgasauslass (7) vorgesehen ist, mittels welchem ein die Abgasleitung (3) durchströmendes Abgas (A) in die Durchmischungskammer (2) einbringbar ist,
- **dadurch gekennzeichnet, dass** der Abgasauslass (7) auf einer dem Lufteinlass (9) zugewandten Seite der Abgasleitung (3) vorgesehen ist,
wobei der Ladeluftkühler (15) und die Abgasleitung (3) derart im Gehäuse (8) angeordnet sind, dass das in die Durchmischungskammer (2) eingebrachte Abgas (A) gerade nicht mehr in den Ladeluftkühler (15) eintritt.

2. Ansaugmodul nach Anspruch 1,
**dadurch gekennzeichnet, dass**
der Ladeluftkühler (15) und die Abgasleitung (3) derart im Gehäuse (8) angeordnet sind, dass die Strömungsrichtung (S_{A}) des in die Durchmischungskammer (2) eingebrachten Abgases (A) im Wesentlichen entgegengesetzt zur Strömungsrichtung (S_{F}) der in die Durchmischungskammer eingebrachten Frischluft (F) verläuft, so dass die beiden Richtungen (S_{A}, S_{F}) einen Winkel von im Wesentlichen 180° zueinander bilden.

3. Ansaugmodul nach Anspruch 1 oder 2,
**dadurch gekennzeichnet, dass**
ein Abstand (d₁) zwischen der Abgasleitung (3) und dem Ladeluftkühler (15) im Wesentlichen gleich einem Abstand (d₂) zwischen der Abgasleitung (3) und der zweiten Gehäusewand (13) ist oder größer oder kleiner als dieser Abstand (d₂) ist.

4. Ansaugmodul nach einem der vorangehenden Ansprüche,
**dadurch gekennzeichnet, dass**
der Ladeluftkühler (15) als Rohrbündelkühler oder als Rippe-Rohr-Kühler mit wenigstens einem Kühlmittelpfad (K) ausgebildet ist, welcher an einer stirnseitigen Gehäusewand (25) einen Kühlmitteleinlass (16) und einen Kühlmittelauslass (17) aufweist und bezüglich des Kühlmittelpfads (K) im Wesentlichen parallel zur Abgasleitung (3) im Gehäuseinnenraum (4) angeordnet ist.

5. Ansaugmodul nach einem der vorangehenden Ansprüche,
**dadurch gekennzeichnet, dass**
- der Ladeluftkühler (15) ein Kühlergehäuse (22) aus Metall umfasst, und/oder dass
- das Gehäuse (8) des Ansaugmoduls (1) aus einem Kunststoff hergestellt ist.

6. Ansaugmodul nach Anspruch 5,
**dadurch gekennzeichnet, dass**
das Kühlergehäuse (22) eine der Abgasleitung (3) zugewandte Gehäusewand (23) aufweist, in welcher wenigstens ein Ladeluftauslass (24) zum Einleiten der im Ladeluftkühler (15) gekühlten Frischluft (F) in die Durchmischungskammer (2) vorgesehen ist.

7. Ansaugmodul nach einem der vorangehenden Ansprüche,
**dadurch gekennzeichnet, dass**
der Ladeluftkühler (15) und/oder die Abgasleitung (3) integral am Gehäuse (8) des Ansaugmoduls (1) ausgeformt sind.

8. Ansaugmodul nach einem der vorhergehenden Ansprüche,
**dadurch gekennzeichnet, dass**
im Gehäuse (8) ein Durchbruch (10) vorgesehen ist, durch welchen die Abgasleitung (3) von außen in die Durchmischungskammer (2) durchgeführt ist.

9. Ansaugmodul nach einem der vorhergehenden Ansprüche,
**dadurch gekennzeichnet, dass**
in der zweiten Gehäusewand (13) wenigstens zwei, vorzugsweise vier, besonders bevorzugt acht, Fluidausläss(e) (11) zum Abführen der in der Durchmischungskammer (2) mit Abgas (A) durchmischten Frischluft (F) vorgesehen sind.

10. Ansaugmodul nach einem der vorhergehenden Ansprüche,
**dadurch gekennzeichnet, dass**
der Abgasauslass (7) wenigstens eine, vorzugsweise mehrere, insbesondere wenigstens vier, höchst vorzugsweise acht, Abgas-Auslassöffnung(en) (5) umfasst.

11. Ansaugmodul nach einem der vorhergehenden Ansprüche,
**dadurch gekennzeichnet, dass**
zwischen Ladeluftkühler (15) und Abgasleitung (3) wenigstens ein Ablenkelement (18) vorgesehen ist, welches derart ausgebildet ist, dass es wenigstens einen Teil der in die Durchmischungskammer (2) eingebrachten Frischluft (F) ablenkt, bevor diese auf das in die Durchmischungskammer (2) eingebrachte Abgas (A) trifft.

12. Ansaugmodul nach Anspruch 11,
**dadurch gekennzeichnet, dass**
- der Lufteinlass (9) und der Abgasauslass (7) einander in einem Querschnitt der Durchmischungskammer (3) zugewandt sind,
- das Ablenkelement (18) im Querschnitt der Durchmischungskammer (2) eine zum Abgasauslass (7) hin gekrümmte, vorzugsweise kreissegmentartige, Geometrie aufweist.

13. Ansaugmodul nach einem der Ansprüche 10 bis 12,
**dadurch gekennzeichnet, dass**
an der wenigstens einen Abgas-Auslassöffnung (5) ein nach innen in die Abgasleitung (3) hinein abstehendes Abgas-Ablenkelement (20) vorgesehen ist, welches zum wenigstens teilweisen Ablenken des durch die Abgasleitung (3) strömenden Abgases (A) ausgebildet ist.

## Claims

1. Intake module (1) with integrated exhaust gas recirculation,
- with a housing (8) defining a housing interior (4) and having a first housing wall (12) with at least one air inlet (9) for conducting fresh air (F) into the housing interior (4) and a second housing wall (13) with at least one fluid outlet (11),
- with a charge-air cooler (15) arranged in the housing interior (4),
- with a mixing chamber (2) which is part of the housing interior (4) and delimited by the charge-air cooler (15) and the second housing wall (13),
- with an exhaust line (3) arranged in the mixing chamber (2) in which at least one exhaust gas outlet (7) is provided which fluidically communicates with the mixing chamber (2), the at least one exhaust gas outlet configured to communicate an exhaust gas (A) flowing through the exhaust line (3) into the mixing chamber (2),
**characterised in that**
- the exhaust gas outlet (7) is provided on a side of the exhaust line (3) facing the air inlet (9),
wherein the charge-air cooler (15) and the exhaust line (3) are arranged in the housing (8) such that the exhaust gas (A) communicated into the mixing chamber (2) bypasses the charge-air cooler (15).

2. Intake module according to claim 1,
**characterised in that**
the charge-air cooler (15) and the exhaust line (3) are arranged in the housing (8) such that the flow direction (S_{A}) of the exhaust gas (A) communicated into the mixing chamber (2) traverses substantially opposed to the flow direction (S_{F}) of the fresh air (F) communicated into the mixing chamber, so that the two directions (S_{A}, S_{F}) form an angle of substantially 180° to one another.

3. Intake module according to claim 1 or 2,
**characterised in that**
a distance (d₁) between the exhaust line (3) and the charge-air cooler (15) is substantially equal to a distance (d₂) between the exhaust line (3) and the second housing wall (13), or is greater or smaller than this distance (d₂).

4. Intake module according to any of the preceding claims,
**characterised in that**
the charge-air cooler (15) is configured as a tube bundle cooler or a rib-tube cooler with at least one coolant path (K) having a coolant inlet (16) and a coolant outlet (17) on a face-side housing wall (25), and being arranged substantially parallel to the exhaust line (3) in the housing interior (4) with respect to the coolant path (K).

5. Intake module according to any of the preceding claims,
**characterised in that**
- the charge-air cooler (15) comprises a cooler housing (22) made of metal, and/or
- the housing (8) of the intake module (1) is made of a plastic.

6. Intake module according to claim 5,
**characterised in that**
the cooler housing (22) comprises a housing wall (23) facing the exhaust line (3), the housing wall having at least one charge-air outlet (24) for conducting the fresh air (F) cooled in the charge-air cooler (15) into the mixing chamber (2).

7. Intake module according to any of the preceding claims,
**characterised in that**
the charge-air cooler (15) and/or the exhaust line (3) are integrally formed on the housing (8) of the intake module (1).

8. Intake module according to any of the preceding claims,
**characterised in that**
an aperture (10) is provided in the housing (8), through which the exhaust line (3) is passed through the mixing chamber (2) from the outside.

9. Intake module according to any of the preceding claims,
**characterised in that**
in the second housing wall (13) at least two, preferably four, particularly preferably eight, fluid outlet(s) (11) are provided for discharging the fresh air (F) mixed with the exhaust gas (A) in the mixing chamber (2).

10. Intake module according to any of the preceding claims,
**characterised in that**
the exhaust gas outlet (7) comprises at least one, preferably a plurality of, in particular at least four, most preferably eight, exhaust gas outlet opening(s) (5).

11. Intake module according to any of the preceding claims,
**characterised in that**
at least one deflection element (18) is provided between the charge-air cooler (15) and the exhaust line (3), the at least one deflection element configured to deflect at least a portion of the fresh air (F) communicated into the mixing chamber (2), before the fresh air mixes with the exhaust gas (A) communicated into the mixing chamber (2).

12. Intake module according to claim 11,
**characterised in that**
- the air inlet (9) and the exhaust gas outlet (7) face towards one another in a cross-section of the mixing chamber (3), and
- the deflection element (18) has in the cross-section of the mixing chamber (2) a geometry curved towards the exhaust gas outlet (7), preferably a circle-segment geometry.

13. Intake module according to any of claims 10 to 12,
**characterised in that**
an exhaust gas deflection element (20) is provided on the at least one exhaust gas outlet opening (5), the exhaust gas deflection element projecting inwards into the exhaust line (3) and configured to at least partially deflect the exhaust gas (A) flowing through the exhaust line (3).

## Revendications

1. Module d'aspiration (1) comprenant un système de recyclage de gaz d'échappement intégré,
- comprenant un boîtier,(8) délimitant un espace intérieur de boîtier (4), lequel présente une première paroi de boîtier (12) pourvue d'au moins une entrée d'air (9) servant à introduire de l'air frais (F) dans l'espace intérieur de boîtier (4) et une deuxième paroi de boîtier (13) pourvue d'au moins une sortie de fluide (11),
- comprenant un refroidisseur d'air de suralimentation (15) disposé dans l'espace intérieur de boîtier (4),
- comprenant une chambre de mélange (2), qui fait partie de l'espace intérieur de boîtier (4) et qui est délimitée par le refroidisseur d'air de suralimentation (15) et la deuxième paroi de boîtier (13),
- comprenant une conduite de gaz d'échappement (3) disposée dans la chambre de mélange (2), dans laquelle est prévue au moins une sortie de gaz d'échappement (7) communiquant fluidiquement avec la chambre de mélange (2), au moyen de laquelle un flux de gaz d'échappement (A) traversant la conduite de gaz d'échappement (3) peut être introduit dans la chambre de mélange (2),
**caractérisé en ce que**
la sortie de gaz d'échappement (7) est prévue sur un côté, tourné vers l'entrée d'air (9), de la conduite de gaz d'échappement (3),
dans lequel
le refroidisseur d'air de suralimentation (15) et la conduite de gaz d'échappement (3) sont disposés de telle manière dans le boîtier (8) que le gaz d'échappement (A) introduit dans la chambre de mélange (2) n'entre plus précisément dans le refroidisseur d'air de suralimentation (15).

2. Module d'aspiration selon la revendication 1,
**caractérisé en ce que**
le refroidisseur d'air de suralimentation (15) et la conduite de gaz d'échappement (3) sont disposés de telle manière dans le boîtier (8) que la direction d'écoulement (S_{A}) du gaz d'échappement (A) introduit dans la chambre de mélange (2) s'étend sensiblement à l'opposé de la direction d'écoulement (S_{F}) de l'air frais (F) introduit dans la chambre de mélange de sorte que les deux directions (S_{A}, S_{F}) forment l'une par rapport à l'autre un angle de sensiblement 180°.

3. Module d'aspiration selon la revendication 1 ou 2,
**caractérisé en ce que**
une distance (d₁) entre la conduite de gaz d'échappement (3) et le refroidisseur d'air de suralimentation (15) est sensiblement égale à une distance (d₂) entre la conduite de gaz d'échappement (3) et la deuxième paroi de boîtier (13) ou est plus grande ou plus petite que cette distance (d₂).

4. Module d'aspiration selon l'une quelconque des revendications précédentes, **caractérisé en ce que**
le refroidisseur d'air de suralimentation (15) est réalisé sous la forme d'un refroidisseur à faisceau de tubes ou sous la forme d'un refroidisseur à tubes et à nervures comprenant au moins une voie de liquide de refroidissement (K), lequel présente, au niveau d'une paroi de boîtier (25) située côté frontal, une entrée de liquide de refroidissement (16) et une sortie de liquide de refroidissement (17) et qui est disposé par rapport à la voie de liquide de refroidissement (K) sensiblement de manière parallèle par rapport à la conduite de gaz d'échappement (3) dans l'espace intérieur de boîtier (4).

5. Module d'aspiration selon l'une quelconque des revendications précédentes, **caractérisé en ce que**
- le refroidisseur d'air de suralimentation (15) comprend un boîtier de refroidisseur (22) en métal, et/ou que
- le boîtier (8) du module d'aspiration (1) est fabriqué à partir d'une matière plastique.

6. Module d'aspiration selon la revendication 5,
**caractérisé en ce que**
le boîtier de refroidisseur (22) présente une paroi de boîtier (23) tournée vers la conduite de gaz d'échappement (3), dans laquelle est prévue au moins une sortie d'air de suralimentation (24) servant à introduire dans la chambre de mélange (2) l'air frais (F) refroidi dans le refroidisseur d'air de suralimentation (15).

7. Module d'aspiration selon l'une quelconque des revendications précédentes, **caractérisé en ce que**
le refroidisseur d'air de suralimentation (15) et/ou la conduite de gaz d'échappement (3) sont formés intégralement au niveau du boîtier (8) du module d'aspiration (1).

8. Module d'aspiration selon l'une quelconque des revendications précédentes, **caractérisé en ce que**
est prévue, dans le boîtier (8), une percée (10), à travers laquelle la conduite de gaz d'échappement (3) est guidée depuis l'extérieur dans la chambre de mélange (2).

9. Module d'aspiration selon l'une quelconque des revendications précédentes, **caractérisé en ce que**
sont prévues, dans la deuxième paroi de boîtier (13), au moins deux, de préférence quatre, le plus de préférence huit sorties de fluide (11) servant à évacuer l'air frais (F) mélangé au gaz d'échappement (A) dans la chambre de mélange (2).

10. Module d'aspiration selon l'une quelconque des revendications précédentes, **caractérisé en ce que**
la sortie de gaz d'échappement (7) comprend au moins une, de préférence plusieurs, en particulier au moins quatre, au maximum de préférence huit ouverture(s) de sortie de gaz d'échappement (5).

11. Module d'aspiration selon l'une quelconque des revendications précédentes, **caractérisé en ce que**
est prévu, entre le refroidisseur d'air de suralimentation (15) et la conduite de gaz d'échappement (3), au moins un élément de déviation (18), qui est réalisé de telle manière qu'il dévie au moins une partie de l'air frais (F) introduit dans la chambre de mélange (2) avant que ce dernier ne rencontre le gaz d'échappement (A) introduit dans la chambre de mélange (2).

12. Module d'aspiration selon la revendication 11,
**caractérisé en ce que**
- l'entrée d'air (9) et la sortie de gaz d'échappement (7) sont tournées l'une vers l'autre dans une section transversale de la chambre de mélange (3),
- l'élément de déviation (18) présente, dans la section transversale de la chambre de mélange (2), une géométrie incurvée en direction de la sortie de gaz d'échappement (7), de préférence réalisée à la manière d'un segment circulaire.

13. Module d'aspiration selon l'une quelconque des revendications 10 à 12, **caractérisé en ce que**
est prévu, au niveau de l'au moins une ouverture de sortie de gaz d'échappement (5), un élément de déviation de gaz d'échappement (20) faisant saillie vers l'intérieur dans la conduite de gaz d'échappement (3), lequel est réalisé pour dévier au moins en partie le gaz d'échappement (A) s'écoulant à travers la conduite de gaz d'échappement (3).
